# EUROPEAN PATENT APPLICATION

(11) **EP 2 361 858 A1**
(43) Date of publication of application: **31.08.2011**
(21) Application number: 11155142.0
(22) Date of filing: 21.02.2011
(51) Int. Cl.: B65G 47/08, B65G 47/88

(54) **Method and system to accumulate and feed objects**

(30) Priority: 24.02.2010 IT BO20100101
(71) Applicant: Cosmopack S.r.l., 41100 Modena (IT)
(72) Inventor: Campagnoli, Roberto, 40134, Bologna (IT); Lacinio, Salvatore, 40050, Montesanpietro, Bologna (IT)
(74) Representative: Gustorf, Gerhard

(57) **Abstract**

-A method to accumulate and feed objects (O) in a system with multiple channels (a-b-c-d-e-f) comprise a first zone (Z1) in an upstream position in which the objects (O) are inserted in a single and controlled manner within each longitudinal objects translation channels and a segment (B-C) of accumulation of groups (Oa1-Oa2-Oa3-Oa4, Oa5-Oa6-Oa7-Oa8, etc.) of objects longitudinally spaced one another.
-A system to carry out the above method comprising: -a first support-translation plane (11); -a second support-translation plane (21); -a plurality of longitudinal guides (30); -a plurality of holding-releasing means (40,50,60,70); -a plurality of first grasping-translating means (80).

## Description

### Field of the invention

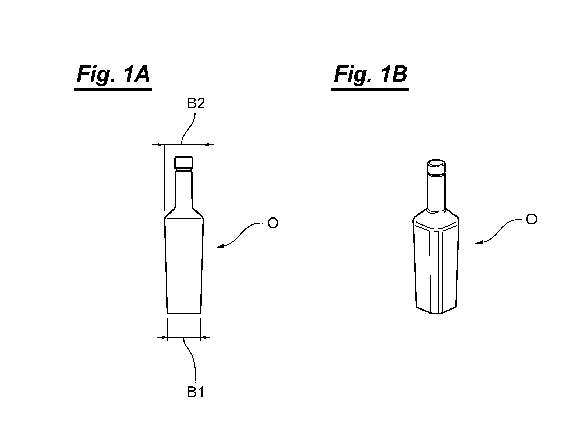

- The present invention concerns a method and a system to accumulate and to feed objects.
- More particularly, the present invention concerns a method and a system to accumulate and to feed objects preferably with respect to a packaging machine positioned downstream with respect to said system in which said packaging machine is able to pack the objects through wrappings, so-called over-wrapping, in which said method/system must operate according to the request of objects of the packaging machine, that is said method/system has to develop the function of objects storage unit and the function of objects feeder as request by the packaging machine.
- Again the present invention concerns a method/system to accumulate and to feed objects having a particular shape, as for example, see fig. 1A and 1B, bottles O, in which said bottles O have a stalk having a trunk-pyramidal shape with the smaller base downwards, in which the base B1 has smaller dimensions in comparison to the dimensions of the transversal section B2 placed to a superior level, as also analogous containers, as for example containers having a trunk-conic shape with smaller base downwards.
- Againg the present invention concerns a method/system of the above mentioned type able to operate with deformable objects, as for example deformable plastic bottles, in which the summation of the longitudinal forces caused by the accumulation in longitudinal rows deforms the objects and/or the more downstream placed objects.

### Background of the Invention

- Currently the known methods and systems do not allow an easy, rapid and sure operational connection between the device for the accumulation-feeding of objects and the packaging machines and, furthermore, said methods/systems are not able to operate with different shapes and/or sizes of objects and/or are not able to operate with the the particular bottles above described and/or are not able to operate with different kinds of packaging machines
- Furthermore, by these known methods and systems is requested the use of a separate apparatus able to group together articles side-by-side transversely and longitudinally in groups of variable quantity for continuous feeding of the packaging machines.
- Again said known methods and system are not fast with reference to the feeding of the the objects and/or of the groups of objects in relationship with the request of the packaging machine, i.e. said known methods/systems are not able to obtain height productive capacity for said packaging machines.

### Brief Summary of the invention

- The purpose of the present invention is therefore to resolve the above mentioned drawbacks.
- The invention, which is characterized by the claims, resolves the problem of creating a method to accumulate and feed objects in a system comprising multiple channels extending longitudinally along which the objects are conveyed from upstream to downstream, in which said method is characterized by the fact that it comprises a first longitudinal segment along which the objects are pushed from upstream to downstream, by the fact that said first segment comprises a first zone in an upstream position in which the objects are inserted in a single and controlled manner within each of the objects translation longitudinal channels, by the fact that said first segment comprises a sub-segment of objects accumulation extending along a determined longitudinal length downstream of said first zone, by the fact that along said sub-segment of groups accumulation of objects said objects are accumulated along each channel, by the fact that said single groups of objects are longitudinally spaced one another, by the fact that said groups accumulation is obtained by stopping or allowing with respect to a plurality of transversal lines the advancement from upstream to downstream of the same objects.
- The invention, which is characterized by the claims, also resolves the problem of creating a system comprising multiple channels extending longitudinally used to accumulate and feed objects, in which said system is characterized by the fact that it comprises: >-a first support-translation plane able to support and longitudinally push the objects from upstream to downstream; >-a plurality of stationary longitudinal guides able to form longitudinal channels of objects translation; >-a plurality of holding-releasing means each comprising a transversal set of single holding-releasing means able to operate along each longitudinal channel of translation, in which said holding-releasing means are longitudinally spaced one another, in which said holding-releasing means are able of holding/releasing along each channel the downstream longitudinal advancement of the objects downstream pushed by the first support-translation plane.

### Brief Description of the Figures

- Further features and advantages of the present invention will become more readily apparent from the following detailed description of some preferred embodiments of the invention, described here purely by way of example without limitation, and described with reference to the enclosed drawing in which:
   - Figure 1A and 1B are views relative to a particular type of objects;
   - Figure 2 and 3 are, respectively, a top view and a side view of the method and of the system of the present invention;
   - Figure 4 is a perspective view of the system illustrated in figures 2 and 3 with some parts removed for better view of other parts;
   - Figure 5 is perspective view of the system;
   - Figure 6 is a perspective and schematic view of the system object of the present invention with reference to the first translation channel of a first embodiment;
   - Figure 7 and 8 are, respectively a plan view and a side view regarding a second embodiment of the basic system;
   - Figure 9 is a perspective view of the system illustrated in the figures 7 and 8 with some parts removed for a better view of others parts;
   - Figure 10 is a perspective and schematic view of the system of the present invention and with reference to the first channel of translation of a second embodiment.

### Exampling Description of the Method

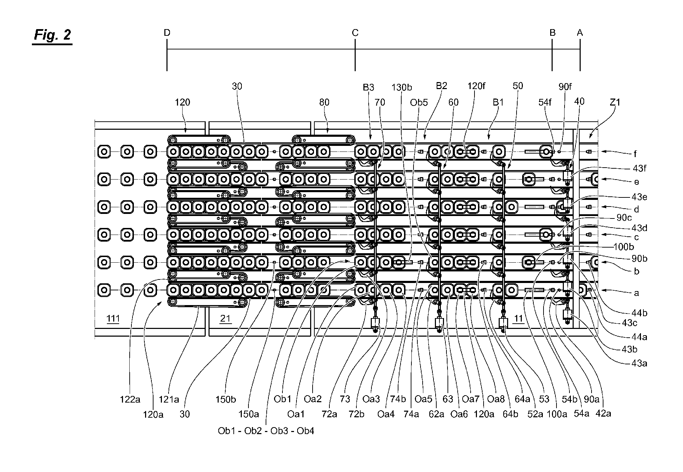

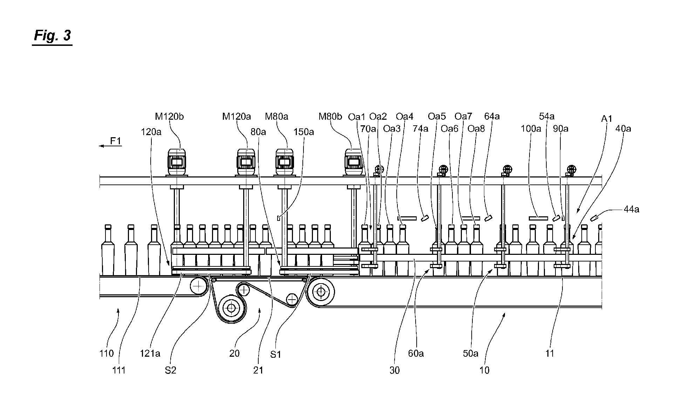

- With reference to the figure 2 and 3, the method object of the present invention is able to accumulate and to feed objects O in a system of multiple channels, a-b-c-d-e-f, along which said objects O are conveyed upstream to downstream as indicated by arrow F1.
- More in particular, said method comprises a first longitudinal operative segment A-C along which the objects O are pushed from upstream to downstream by a force applied on the base of the same objects O, in which said force is longitudinally directed from upstream to downstream, in which said first segment A-C comprises a first zone Z1 of insertion of the objects and a longitudinal sub-segment B-C of accumulation of objects O.
- The zone of insertion Z1 is positioned upstream with respect to the segment A-C and in said zone Z1 the objects O are inserted in a single and controlled manner within each channel a-b-c-d-e, i.e., as will be more comprehensible hereinafter, in this zone is allowed or not allowed, in selective manner, the downstream translation of the objects and, therefore, to control the quantity of objects that can translate downstream for each of the channels a-b-c-d-e-f.

- The longitudinal sub-segment of accumulation B-C extends with a determined longitudinal lenght downstream of said first zone Z1 and said longitudinal sub-segment B-C comprises three stationary transversal lines B1 B2 B3 of holding-releasing objects, in which said lines are positioned longitudinally spaced among them.
- Along said longitudinal sub-segment of accumulation B-C the objects O are accumulated in longitudinal groups into the single channels a-b-c-d-e-f, see for example the groups Oa1-Oa2-Oa3-Oa4 Oa5-Oa6-Oa7-Oa8 etc. within the channel a, in which each of said groups is formed by four objects positioned one behind the other, in which said singular groups of objects are separated and spaced longitudinally among them, in which said accumulation in groups is obtained by holding or allowing in one or more series of stationary transversal points of the transversal lines B1 B2 B3 the advancement downstream of the objects.
- Therefore, by the above mentioned accumulation, the objects positioned more downstream of each group, that is for example the objects Oa1, Oa5, Ob1, etc., will be subject to a longitudinal load determined by the summation of the longitudinal forces applied on the base of the each of the four objects that form the respective group, resolving in this way the drawbacks above mentioned.
- Then, after the execution of the particular accumulation above described, the groups of objects are advanced, that is at a determined instant time is allowed the advancement of a transversal series of groups of objects transversally aligned with respect to the line B3, see the groups Oa1-Oa2-Oa3-Oa4, Ob1-Ob2-Ob3-Ob4, etc., and, upstream, at the same instant time, is allowed the advancement of an analogous series Oa5-Oa6-Oa7-Oa8, Ob5-Ob6-Ob7-Ob8; etc. of transversal groups of objects transversally aligned with respect to the the line B2, obtaining in this manner an advancement downstream for said groups of objects maintaining the longitudinal space of separation among them and, if desirable, the possibility to feed in this manner batches of objects within a packaging machine or to execute other operations, or, the advancement of said groups yet maintaining the effective space among the groups, in which said advancement is obtained providing, in the points defined by the transversal lines of holding/releasing B1 B2 B3, to hold the advancement downstream of a second successive group of objects after the passage of a first group of objects.
- In the illustrated case the method is used for feeding a packaging machine used for packaging batches of twenty-four objects each, that is six objects transversally aligned and four objects longitudinally aligned, or a packaging machine with a double lane used for packaging two batches comprising twelve objects, in which each batch includes three transversal objects and four longitudinal objects.
- With reference to the previous description, it results evident that the above described method can be also used to realize bathes having a different number of objects with respect to the bathes above described, that is a versatile method that can be easily and quickly adaptable with different typologies of packaging machines.
- Furthermore, the described method is also particularly suitable to manipulate the objects illustrated in fig. 1A and 1B.
   - In fact, when the bottles O are accumulated one behind the other in the above described manner, that is by applying a force on the base of each bottles, the same bottles assume a "fan-shaped" configuration, with the base of each bottle against the base of the other bottles and, in the specific case, if said accumulation comprises a quantity greater than four objects placed one behind the other, the fifth bottle, that is bottle placed more upstream, will result too tilted with consequent turnover.
   - The same considerations are applicable for analogous objects in which it will be determined each time, the maximum number of objects for each group, Oa1-Oa2-Oa3-Oa4, Oa5-Oa6-Oa7-Oa8, etc., with the purpose to obviate the turnover of the more back objects.
   - With reference to the aforesaid method it is also possible to form a further second longitudinal segment C-D, along which the objects O are pushed from upstream to downstream by a force applied on the base of the same objects, in which said second longitudinal segment C-D is positioned downstream with respect to the first longitudinal segment A-C.
   - Along said second longitudinal segment C-D the objects are grasped in positive manner by means of a grasping of the side walls of the same objects O and, then, the grasped objects O are translated downstream, and then released in single manner or in groups and, anyways, in a controlled manner with the purpose to allow said objects to translate downstream through the force applied to the base of the same objects.

### Structural Description of the Basic System

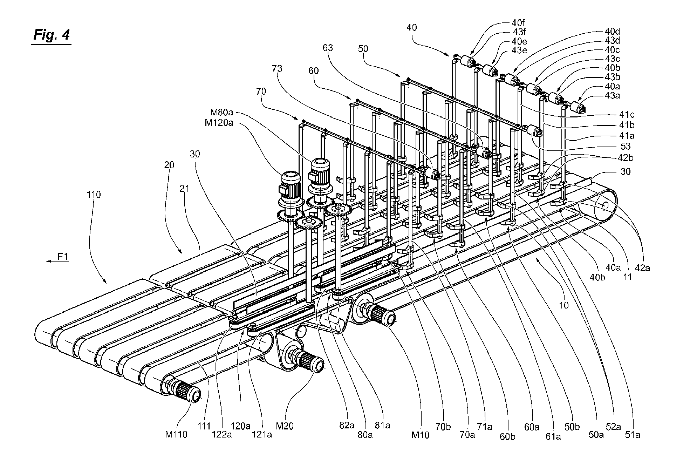

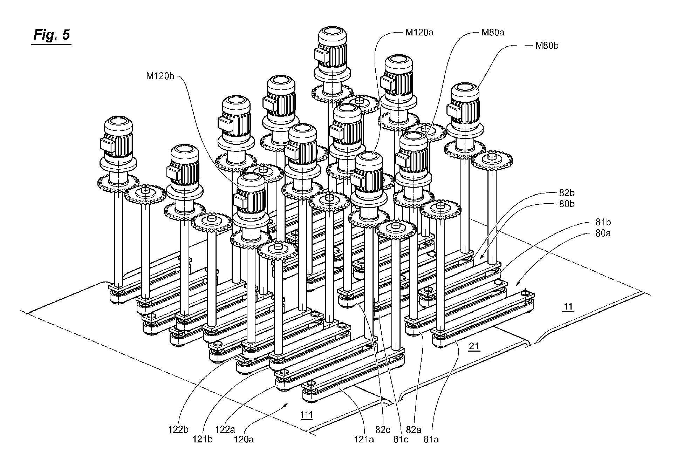

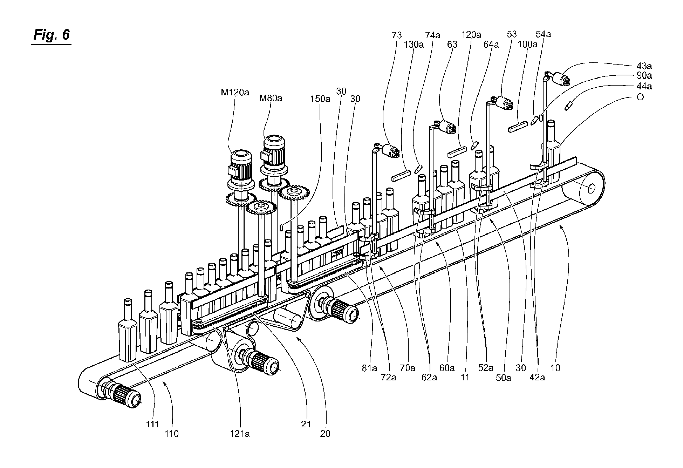

- With reference to the figures 2, 3, 4, 5 and 6, they illustrate a system able to actuate the method previously described, that is a system with longitudinal channels a-b-c-d-e-f for the translation of the objects and for accumulating and feeding the objects O in the above described manner from upstream to downstream, see arrow F1.
- Said system, substantially comprises: -a first supporting-translating conveyor 10 for the containers, which it is able to support and translate the objects O longitudinally from upstream to downstream by means of a transport plane 11 formed by the upper branch of the same conveyor 10; -a second supporting-translating conveyor 20, which it is able to translate longitudinally the objects O from upstream to downstream by means of a support plane 21, in which said second conveyor 20 is positioned downstream of the first conveyor 10 forming an aperture between the two conveyors; -a plurality of longitudinal guides 30 able to form the longitudinal channels a-b-c-d-e-f of translation of the objects O; -a plurality of stationary transversal groups of holding-releasing means 40, 50, 60, 70, in which each group is positioned longitudinally spaced with respect to the other, in which said groups are able to operate along and into each longitudinal channel of translation a-b-c-d-e-f, in which said holding-releasing means 40, 50, 60, 70, are able to stop/allow the downstream longitudinal advancement of the objects O pushed downstream by the first conveyor 10; -a plurality of first grasping-translating means 80, one for each longitudinal channel of translation of the objects a-b-c-d-e-f, in which said first grasping-translating means 80 extend longitudinally with an upstream portion positioned vertically spaced above the first transport plane 11 and a downstream portion positioned vertically spaced above the second transport plane 21, in which said first grasping-translating means 80 are able to grasp within each channel a-b-c-d-e-f the objects O by grasping the vertical sides of said objects and are able to downstream translate said objects in an independent manner with respect to the translation of the objects along the other channels.
- With reference to the first conveyor 10 it is preferably a belt conveyor that wounds in a closed loop on respective rollers and it is driven by a respective servomotor M-10.
- With reference to the second conveyor 20 it is preferably a belt conveyor that wounds in a closed loop on respective rollers and it is driven by a respective servomotor M-20 or by a mechanical transmission linked with the first conveyor 10.
- With reference to the longitudinal guides 30 they are preferably supported hanging from the top towards the bottom and positioned to a level little above the transport belt in order to obviate the contact with this belt.
- With reference to the stationary holding/releasing means 40, 50, 60, 70, they are positioned longitudinally spaced among them and preferably comprise vertical rods 41a-41b-41 c-etc., 51a-etc., 61a-etc., 71a-etc., which are supported hanging from the top towards the bottom, in which said rods are driven to rotate with respect to their vertical axis, in which said rods supports in proximity of their inferior portion the teeth, 42a-42b-etc., 52a-etc., 62a-etc., 72a-etc., in which said teeth are able to move in respective horizontal plains, in which says teeth 42a-42b-etc., 52a-etc., 62a-etc., 72a-etc., are positioned to operate in a respective objects translation channel a-b-c-d-e-f with the purpose to stop or to allow the downsteam transit of the objects O.
- Still with reference to said holding-releasing means 40, 50, 60, 70, preferably they comprise: -a first transversal series of holding-releasing means 40a-40b-40c-40d-40e-40f, positioned upstream with respect to the system, in which each single holding-releasing means 40a, 40b, etc., is operated in its holding or releasing position in an independent manner with respect with the others holding/releasing means 40a, 40b, etc. of the same transversal series through a respective actuator 43a, 43b, etc.; -a second transversal series of holding/releasing means 50a-50b-etc., positioned spaced downstream with respect to the first series of holding/releasing means 40, in which the single holding/releasing means 50a, 50b, etc. of said second series 50a-50b-etc. are operated simultaneously in their holding or releasing position through an actuator 53; -a third transversal series of holding/releasing means 60a-60b-etc., positioned spaced downstream with respect to the second series of holding/releasing means 50, in which the single holding/releasing means 60a, 60b, etc. of said third series 60a-60b-etc. are operated simultaneously in their holding or releasing position through an actuator 63; and a fourth transversal series of holding/releasing means 70a-70b-etc. positioned spaced downstream with respect to the third series of holding/releasing means 60, in which the single holding/releasing means 70a, 70b, etc., of said fourth series of holding/releasing 70a-70b-etc. are operated simultaneously in their holding or releasing position through an actuator 73.
- With reference to the first grasping-translating means 80a-80b-etc., see in particular fig. 5, they are formed by a series of single grasping-translating means 80a, 80b, etc., a single means for each longitudinal objects translation channel a-b-c-d-e-f, in which said grasping-translating means 80a-80b-etc. are supported hanging from the top towards the bottom through respective vertical rods and shafts.
- Said first grasping-translating means 80a-80b-etc. extend longitudinally with an upstream portion positioned vertically spaced above the first transport plane 11 and a downstream portion positioned vertically spaced above the second transport plane 21, with the purpose to singularly grasp the objects by grasping the vertical sides of the same objects, and after this to translate this objects downstream and then to release the objects singularly or in groups on the second plane of transport 21 by a respective command.

- With reference to the example illustrated, see in particular fig. 5, said grasping-releasing means comprise for each longitudinal translation channel a-b-c-d-e-f, a couple of belts 81a-82a, 81b-82b, etc., in which said belts are wounded in closed paths around respective rollers having vertical axes with the purpose to configure respective active grasping/releasing branches, in which said active branches extend longitudinally, in which said active braches face each other and are spaced apart with a distance so that the objects can be grasped, in which each couple of belts, 81a-82a, 81b-82b, etc., is operated through a respective servomotor M80a, M80b, etc.
- The system above described is controlled by an electronic control unit not illustrated, in which said control unit provides to control the motor M10 of the first conveyor 10, the motor M20 of the second conveyor 20, the actuators 43a 43b etc. of the first transversal series of holding/releasing means 40, the actuators 53 63 73 of the second, third and fourth transversal series of holding/releasing means 50 60 70 and the motors M-80a, M-80b, etc. of each single grasping/translating means 80a 80b etc.
- With reference to the figures 2 and 3, with the purpose to increase the operational speeds and/or with the purpose to manipulate particularly unstable objects, the system can comprise some transversal series of nozzles 44a-44b-etc., 54a-etc., 64a-etc. 74a-etc. which are able to blow air, in which said nozzles are positioned in proximity (upstream) of each single holding/releasing means, 40a-40b-etc., 50a-etc., 60a-etc. 70A-etc., preferably connected with the control unit, in which said air nozzles 44a-44b-etc. air., 54a-etc., 64a-etc. 74a-etc., are able to blow air against the top of the objects O, on command, when the respective teeth 42a-42b-etc.; 52a-etc., 62a-etc., 72a-etc., release the objects which have been previously stopped et accumulated against the respective tooth, with the purpose to apply at least on the top of the more upstream objects of each group a longitudinal force directed downstream, with the purpose to balance the downstream push of the object during the phase of passage from the state of rest to the state of motion, therefore with the purpose to obviate an inclination and/or a turnover of the same objects during said phase of start.
- If desirable the system can also comprise a series of sensors 90a-90b-etc. positioned in proximity of the single first holding/releasing means 40a 40b, in which said sensors 90a, 90b, etc. are connected with the control unit and are able to sense the passage of the objects O for every means of holding-releasing 40a 40b, as well as said system can comprise a series of sensor 100a-100b-etc., positioned in proximity of the second holding/releasing means 50a-50b-etc., in which said sensor means 100a-100b-etc. are connected with the control unit and they are able to sense the quantity of objects accumulated or upside-down placed in proximity of each of said second holding/releasing means 50a-50b-etc., as well as further similar sensors in proximity of the other holding/releasing means 60a-60b-etc., 70a-70b-etc.
- Again if requested said system can comprise a series of sensors 150a-150b-etc. positioned in proximity of the single first grasping-translating means 80a-80b-etc., in which said sensors 150a-150b-etc. are connected with the control unit and are able to sense and to count the objects O that are released downstream by said grasping-translating means 80.
- With reference to the opening between the first and the second transport plane 11-21, if desirable it is possible to provide a dead plate in anti-friction material as a bridge S1.
- With reference to the above structural description, preferably, the system executes the following modus operandi.

### Functional description of the Basic System

- Initially, through the first transversal series 40a-40b-40c-40d-40e-40f of holding-releasing means is selectively allowed or stopped the passage of the objects O, in order to obtain, against the second series 50a-50b-etc. of holding-releasing means 50, a number of four objects arranged one behind the other along each channel a-b-c-d-e-f.
- Then, the teeth 52a-52b-etc. of the second transversal series 50a-50b-etc. of holding-releasing means are simultaneously opened, to allow the advancement of the groups formed of four objects each, and to position said groups of objects against the teeth 62a-62b-etc. of the third series of holding-releasing means 60a-60-etc., in which said teeth 62a-62b-etc. are in a closed position, and then re-position the teeth 52a-52b-etc. in the closed position with the purpose to accumulate new groups of objects against said teeth 52a-52b-etc..
- The single groups of objects positioned against the third series 60a-60b-etc., of the holding-releasing means 60 will be released by opening simultaneously the teeth 62a-62b-etc., and said single groups, advancing downstream, will come against the teeth 72a-etc. of the fourth transversal series 70a-etc. of holding-releasing means 70, while upstream, the teeth 62a-62b-etc. are as soon as possible positioned in their closed position, with the purpose to stop the next groups of objects released by the second holding-releasing means 52a-52b-etc..
- Then, opening the teeth 72a-etc. of the fourth series of holding-releasing means 70a-70b-etc. the single groups can advance downstream, going against the single grasping-translating means 80a-80b-etc., in which said grasping-translating means 80a-80b-etc. will execute the translation of the objects downstream and their releasing in a desired sequence by acting the single motors M80a, M80b, etc..
- With reference to the above description it is evident that during the cited operations the single groups of four objects longitudinally placed along each channel a-b-c-d-e-f remain always longitudinally distanced and spaced among them and, therefore, the above mentioned drawback are solved.

### Exemplificative Description of a First Variant of Realization of the Basic System

- Again with reference to the figures 2, 3, 4, 5 and 6, according to a first variant of realization, the basic system can further comprise: -a third support-translating conveyor 110 which is able to longitudinally translate the objects O from upstream to downstream through a transport plane 111, in which said third conveyor 110 is positioned downstream of the second conveyor 20 forming an opening among them; and a plurality of second grasping-translating means, indicated as a group with 120, in which said second grasping-translating means 120 extend longitudinally with an upstream portion positioned vertically spaced above the second transport plane 21 and a downstream portion positioned vertically spaced above the third transport plane 111, in which said second grasping-translating means 120 are able to grasp along each channel a-b-c-d-e-f the objects O by grasping the vertical sides of said objects and then to translate said objects in an independent manner with respect to the translation of the objects along the other channels a-b-c-d-e-f.
- With reference to the second grasping-translating means 120, see fig. 5 in particular, they are substantially similar to the previous grasping-translating means 80, therefore formed by a series of individual grasping-translating means 120a-etc., one for each longitudinal channel of objects translation a-b-c-d-e-f, in which each of said second grasping-translating means 120a comprises a couple of belts 121 a and 122a, in which said belts are wounding in closed paths around respective rollers having vertical axis, in which each couple of belts 121a-122a, 121b-122b, etc., is operated by a respective servomotor M-120a, M-120b, etc.
- With reference to the opening among the second and the third plane of transport 21-111, if desirable it is possible to provide a dead plate in anti-friction material as a bridge S2.

### Exampling Description of a Second Variant of realization of the Basic System

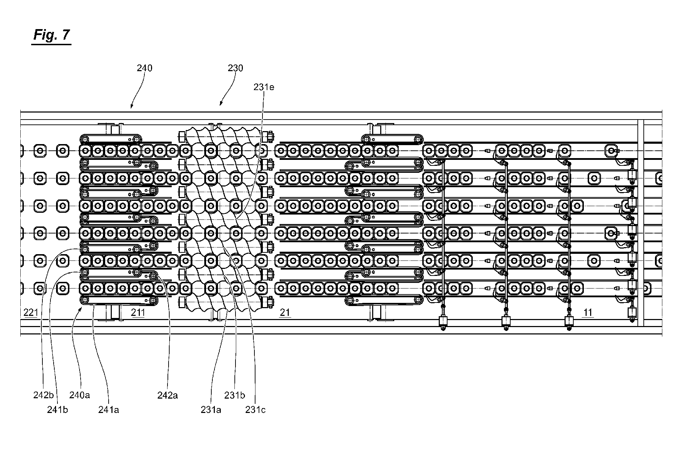

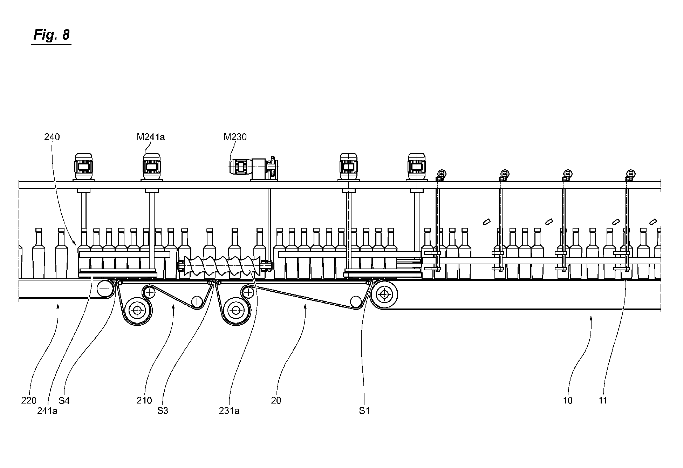

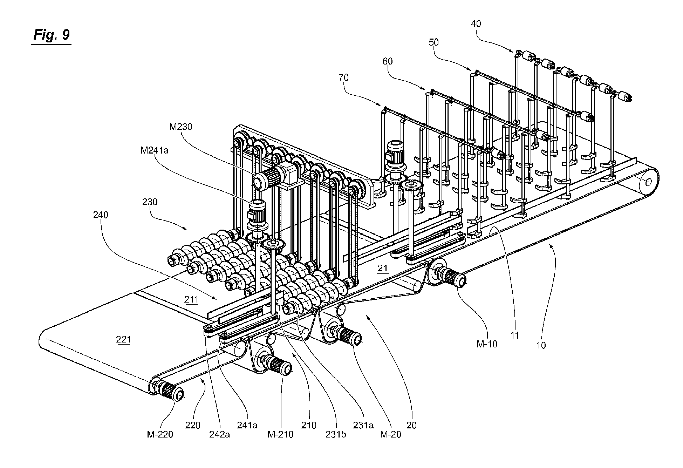

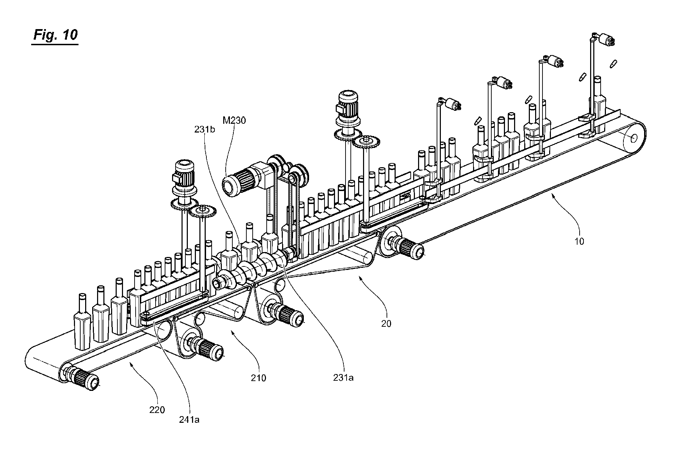

- With reference to the figures 7, 8, 9 and 10, according to a second variant of realization, the basic system can further comprise: -a third supporting-translating conveyor 210 which is able to longitudinally translate the objects O from upstream to downstream through a support plane 211, in which said third conveyor 210 is positioned downstream of the second conveyor 20 forming an opening among them; and optionally a fourth supporting-translating conveyor 220 which is able to longitudinally translate the objects O from upstream to downstream through a support plane 221, in which said fourth conveyor 220 is positioned downstream of the third conveyor 210 forming an opening among them; -a plurality of pushing-holding means 230, in which said pushing-holding means extend longitudinally with an upstream portion positioned above the second transport plane 21 and a downstream portion positioned above the third transport plane 211, in which said pushing-holding means 230 are able to engage the vertical sides of the objects O and to longitudinally translate and/or hold the same objects; and optionally a plurality of second grasping-translating means 240, one for each longitudinal channel of objects translation a-b-c-d-e-f, in which said second grasping-translating means 240 extend longitudinally with an upstream portion positioned above the third transport plane 211 and a downstream portion positioned above the fourth transport plane 221, in which said second grasping-translating means 210 are able to grasp the vertical sides of the objects O along each channel a-b-c-d-e-f and to translate downstream the same objects in an independent manner with respect to the translation of the objects along the other channels a-b-c-d-e-f.
- With reference to the pushing-holding means 230 they preferably comprise a plurality of cochleas 231a, 231 b, etc., preferably of the type with double principle, with longitudinal axle of rotation, in which said cochleas 231 a, 231 b, etc. are transversally spaced among them with a distance able to engage within the respective grooves the objects O, with the purpose to engage along each channel a-b-c-d-e-f the objects O, in which, more particularly, in a first channel the objects are engaged through a first groove of a cochlea and in the adjoining channel the objects are engaged through a second groove of the same cochlea.
- Preferably, see fig. 9, the cochleas are operated by a transmission with belt operated through a single motor M-230 connected and controlled by the control unit of the system
- With reference to said second grasping-translating means 240, they are substantially similar to previous grasping-translating means 80 and 120, therefore they are formed by a series of single grasping-translating means 240a-etc., one for each longitudinal objects translation channel a-b-c-d-e-f, in which each of said second grasping-translating means 240a comprises a couple of belts 241 a and 241 b, in which said belts are wounded in closed paths around respective rollers having vertical axis, in which each couple of belts, 241 a-242a, 241 b-242b, etc., is operated by a respective servomotor M-241 a, M-241B, etc.
- With reference to the openings among support planes, if desired, it is possible to provide a dead in anti-friction material as a bridge S3 and S4.
- The description of the method and of the system object of the present invention are provided solely by way of example and without restrictive intent, and it is therefore clearly possible to modify and/or vary these in ways suggested by practice and their use or application within the scope of the following claims, in which these claims form an integral part of the present description.

## Claims

1. Method to accumulate and feed objects (O) in a system comprising longitudinally extended multiple channels (a-b-c-d-e-f) along which the objects (O) are conveyed from upstream to downstream, **characterized by the fact that** said method comprises a first longitudinal segment (A-C) along which the objects (O) are pushed from upstream to downstream, **by the fact that** said first segment (A-C) comprises a first zone (Z1) in an upstream position in which the objects (O) are inserted in a single and controlled manner within each of the longitudinal objects translation channels, **by the fact that** said first segment (A-C) comprises a sub-segment (B-C) of objects accumulation extending along a determined longitudinal length downstream of said first zone (Z1), **by the fact that** along said sub-segment of accumulation (B-C) groups (Oa1-Oa2-Oa3-Oa4, Oa5-Oa6-Oa7-Oa8, etc.) of objects are accumulated along each channel (a-b-c-d-e-f), **by the fact that** said single groups of objects (Oa1-Oa2-Oa3-Oa4, Oa5-Oa6-Oa7-Oa8, etc.) are longitudinally spaced one another, **by the fact that** said groups (Oa1-Oa2-Oa3-Oa4, Oa5-Oa6-Oa7-Oa8, etc.) accumulation is obtained by stopping or allowing with respect to a plurality of transversal lines (B1, B2, B3) the advancement from upstream to downstream of the same objects (O).

2. Method according to claim 1, **characterized by the fact that** along said sub-segment of accumulation (B-C) the groups (Oa1-Oa2-Oa3-Oa4, Oa5-Oa6-Oa7-Oa8, etc.) previously formed and longitudinally spaced are advancing maintaining said groups (Oa1-Oa2-Oa3-Oa4, Oa5-Oa6-Oa7-Oa8, etc.) longitudinally spaced one another.

3. Method according to the claim 1 or 2, **characterized by the fact that** along at least a first determined channel (a) it is provided the stopping of at least a first group of objects (Oa1-Oa2-Oa3-Oa4) with respect to a first transversal line (B3) of holding-releasing objects, **by the fact that** along the same first determined channel (a) it is provided the stopping of at least a second group of objects (Oa5-Oa6-Oa7-Oa8) with respect to a second transversal line (B2) of holding/releasing objects placed upstream with respect to said first line first transversal line (B3) of holding/releasing objects, **by the fact that** said first group of objects (Oa1-Oa2-Oa3-Oa4) stopped is longitudinally spaced with respect to said second group of objects (Oa5-Oa6-Oa7-Oa8) stopped, and **by the fact that** substantially in the same istant time it is provided the release of said first group of objects (Oa1-Oa2-Oa3-Oa4) stopped and of said second group of objects of objects (Oa5-Oa6-Oa7-Oa8) stoped with the purpose to allow a longitudinal downstream advancement of said two groups of objects (Oa1-Oa2-Oa3-Oa4 and Oa5-Oa6-Oa7-Oa8) maintaining the longirudinal spacement between said two groups (Oa1-Oa2-Oa3-Oa4 and Oa5-Oa6-Oa7-Oa8).

4. Method according to one of the previous claims, **characterized by the fact** of further comprising after the first longitudinal segment (A-C) a second longitudinal segment (C-D) along which the objects (O) are pushed from upstream to downstream, **by the fact that** along said second segment (C-D) the objects (O) are grasped by means of a grasp executed against the side walls of the same objects (O), and **by the fact that** the grasped objects are translated from said first longitudinal segment (A-C) to said second longitudinal segment (C-D), and **by the fact that** the grasped objects are then released in single and controlled manner on the second longitudinal segment (C-D).

5. System comprising longitudinally extended multiple channels (a-b-c-d-e-f) used to accumulate and feed objects (O), **characterized by the fact that it comprises:** >-a first support-translation plane (11) able to support and longitudinally push the objects from upstream to downstream; >-a plurality of longitudinal guides (30) able to form longitudinal channels (a-b-c-d-e-f) of objects (O) translation; >-a plurality of stationary holding-releasing means (40, 50, 60, 70) each comprising a transversal set (40a-40b-etc., 50a-50b-etc., 60a-etc., 70a-etc.) of single holding-releasing means able to operate along each longitudinal channel of translation (a-b-c-d-e-f), in which said holding-releasing means (40, 50, 60, 70) are longitudinally spaced one another, in which said holding-releasing means (40, 50, 60, 70) are able of holding/releasing along each channel the downstream longitudinal advancement of the objects (O) downstream pushed by the first support-translation plane (11).

6. System according to claim 5, **characterized by the fact** that it comprises: >-a first transversal set (40) of holding-releasing means positioned upstream of the system, in which each of the holding-releasing means (40a, 40b, etc.) is operated by a respective actuator (43a, 43b, etc.) in its holding or releasing position; >-at least a second transversal set (50) of holding-releasing means positioned longitudinally spaced downstream with respect to the first transversal set (40) of holding-releasing means, in which single holding-releasing means (5a, 50b, etc.) of said second transversal set (50) of holding-releasing means are operated all together through a single actuator (53) in their holding or releasing position.

7. System according to claim 5 or 6, **characterized by the fact** of further comprising one or more transversal sets (44a-44b-etc., 54a-etc., 64a-etc. 74a-etc.) of blow air nozzles placed in proximity of each single holding-releasing means (40a-40b-etc., 50a-etc., 60a-etc. 70A-etc.), in which said blow air nozzles (44a-44b-etc., 54a-etc., 64a-etc. 74a-etc.) are able to blow air against the top of the objects (O).

8. System according to claim 5 or 7, **characterized by the fact** of further comprising: >-a second support-translation plane (21) able to support and push the objects (O) from upstream to downstream, in which said second support-translation plane is placed downstream of the first support-translation plane (11); >-a plurality of first grasping-translating means (80), one (80a, 80b, etc.) for each longitudinal channel (a-b-c-d-e-f) of objects translation, in which said first grasping-translating means (80) have a longitudinal extension with an upstream portion positioned above the first support-translation plane (11) and a downstream portion positioned above the second support-translation plane (21), in which said first grasping-translating means (80) are able to grasp the vertical sides of the objects (O) and to downstream translate said objects (O).

9. System according to one of the claims from 5 to 8, **characterized by the fact** of further comprising: >-a third transversal set (60) of holding-releasing means positioned spaced downstream of said second set of holding-releasing means (50), in which each of the holding-releasing means (60a-60b-etc.) of said third set (60a-60b-etc.) are operated all together by a single actuator (63) in their holding or releasing position; and >-a fourth transversal set (70) of holding-releasing means positioned spaced downstream of said third set of holding-releasing means (60), in which the single holding-releasing means (70a-70b-etc.) of said fourth set (70a-70b-etc.) are operated all together by a single actuator (73).

10. System according to one of the claims from 5 to 9, **characterized by the fact that** by said second, third and fourth transversal set of holding-releasing means (50a-50b-etc., 60a-etc., 70a-etc.) is provided an accumulation of groups (Oa1-Oa2-Oa3-Oa4, Oa5-Oa6-Oa7-Oa8, etc.) of objects longitudinally spaced one another and along each channel (a-b-c-d-e-f).

11. System according to one of the claims from 5 to 10, **characterized by the fact that** by means of said second, third and fourth transversal set of holding-releasing means (50a-50b-etc., 60a-etc., 70a-etc.) is provided an advancement of groups (Oa1-Oa2-Oa3-Oa4, Oa5-Oa6-Oa7-Oa8, etc.) of objects along each channel, in which said advancement is executed maintaining the single groups (Oa1-Oa2-Oa3-Oa4, Oa5-Oa6-Oa7-Oa8, etc.) longitudinally spaced with respect to the groups positioned upstream and downstream.

12. System according to one of the claims from 5 to 11, **characterized by the fact that** for each channel of translation (a-b-c-d-e-f) is provided a sensor (100a-100b-etc.) able to sense the number of objects (O) that are positioned upstream of each holding-releasing means (50a-50b-etc.) of the second transversal set of holding-releasing means (50) and **by the fact that** said second sensors (100a-100b-etc.) are connected with the control unit of the system.

13. System according to one of the claims from 5 to 12, **characterized by the fact that** for each channel of translation (a-b-c-d-e-f) and in proximity of the single first grasping-releasing means (80a-80b-etc.) are provided sensors (150a-150b-etc.) able to sense and to count the objects (O) that are released by said single grasping-translating means (80a-80b-etc.) and **by the fact that** said sensors (150a-150b-etc.) are connected with the control unit.

14. System according to one of the claims from 5 to 13, **characterized by the fact** of further comprising: >-a third supporting-translating plane (111) able to support and to push the objects (O) longitudinally from upstream to downstream; >-a plurality of second grasping-translating means (120), one (120a-120b)-etc.) for each longitudinal channel (a-b-c-d-e-f) of objects translation, in which each of the grasping-translating means (120a-120b-etc.) is operated in an independent manner with respect to the other grasping-translating means (120a-120b-etc.), in which said second grasping-translating means (120a-120b-etc.) have a longitudinal extension with an upstream portion positioned above the second support-translation plane (21) and a downstream portion positioned above the third support-translation plane (111), in which said second grasping-translating means (120) are able to grasp the vertical sides of the objects (O) and to downstream translate said objects (O).

15. System according to claim 14, **characterized by the fact that** each of said single second grasping-translating means (120a-120b-etc.) is operated by respective motors (M120a-M120b-etc.), in which each single motor (M120a - M120b-etc) it is connected and controlled by the control unit of the system.

16. System according to one of the claims from 05 to 15, **characterized by the fact** of further comprising: >-a third plane of support-translation (211) able to support and to push the objects (O) longitudinally from upstream to downstream; >-a plurality of pushing-holding means (230) having a longitudinal extension with an upstream portion positioned above the second support-translation plane (21) and a downstream portion positioned above the third support-translation plane (211), in which said pushing-holding means (230) are able to engage the vertical sides of the objects (O) and to longitudinally translate or hold said objects (O).

17. System according to claim 16, **characterized by the fact that** said pushing-holding means (230) comprise a plurality of cochleas (231a-231b-etc.) with their longitudinal rotational axes oriented longitudinally and transversally spaced to one another.

18. System according to one of the claims from 18 to 17, **characterized by the fact** of further comprising: >-a fourth plane of support-translation (221) able to support and to push the objects (O) longitudinally from upstream to downstream; >-a plurality of second grasping-translating means (240), one (240a-240b-etc.) for each longitudinal channel (a-b-c-d-e-f) of objects translation, in which said second grasping-translating means (240a-240b-etc.) have a longitudinal extension with an upstream portion positioned above the third support-translation plane (211) and a downstream portion positioned above the fourth support-translation plane (221), in which said second grasping-translating means (240) are able to grasp the vertical sides of the objects (O) and to downstream translate said objects (O).

19. System according to one of the claims from 5 to 18, **characterized by the fact that** said grasping-translating means (80, 120, 240) comprise a plurality of single grasping-translating means (80a-80b-etc., 120a-120-etc., 240a-240b-etc.) one for each longitudinal translation channel (a-b-c-d-e-f), and **by the fact that** said single grasping-translating means are positioned on different levels with the purpose to allow a partial overlapping among them.
